# EUROPÄISCHE PATENTSCHRIFT

(11) **EP 2 926 203 B1**
(45) Veröffentlichungstag und Bekanntmachung des Hinweises auf die Patenterteilung: **21.08.2019**
(21) Anmeldenummer: 13783587.2
(22) Anmeldetag: 29.10.2013
(51) Int. Cl.: G05B 9/03

(54) **FELDGERÄT MIT REDUNDANTER AUSLEGUNG ZUR BESTIMMUNG ODER ÜBERWACHUNG EINER PROZESSGRÖSSE IN DER AUTOMATISIERUNGSTECHNIK**
FIELD DEVICE FOR DETERMINING OR MONITORING A PROCESS VARIABLE IN AUTOMATION ENGINEERING
APPAREIL DE TERRAIN PERMETTANT DE DÉTERMINER OU DE SURVEILLER UNE GRANDEUR DE PROCESSUS EN TECHNIQUE D'AUTOMATISATION

(30) Priorität: 28.11.2012 DE 102012111518; 09.01.2013 DE 102013100159
(43) Veröffentlichungstag der Anmeldung: 07.10.2015
(73) Patentinhaber: Endress+Hauser SE+Co. KG, 79689 Maulburg (DE)
(72) Erfinder: GIRARDEY, Romuald, F-68730 Blotzheim (FR)
(74) Vertreter: Andres, Angelika Maria
(86) Internationale Anmeldenummer: PCT/EP2013/072566
(87) Internationale Veröffentlichungsnummer: WO 2014/082806

(56) Entgegenhaltungen:
- WO-A1-2004/013585
- WO-A2-2011/158120
- DE-A1-102009 026 785
- US-B2- 7 130 703

## Beschreibung

Die Erfindung betrifft ein Feldgerät zur Bestimmung oder Überwachung einer Prozessgröße in der Automatisierungstechnik. Das Feldgerät ist so ausgestaltet, dass es einem Sicherheitsstandard genügt, der in einer vorgegebenen sicherheitskritischen Anwendung gefordert ist. Weiterhin umfasst das Feldgerät einen Sensor, der nach einem definierten Messprinzip arbeitet, und eine Kontroll-/Auswerteeinheit, die die vom Sensor gelieferten Messdaten entlang von zumindest drei redundanten und/oder diversitär ausgelegten Messkanälen aufbereitet und auswertet. Eine entsprechende Lösung ist aus der WO 2004/013585 A1 bekannt geworden.

In der Automatisierungstechnik, insbesondere in der Prozessautomati-sierungstechnik, werden Feldgeräte eingesetzt, die zur Bestimmung und Überwachung von Prozessvariablen dienen. Beispiele für derartige Feldgeräte sind Füllstandsmessgeräte, Durchflussmessgeräte, Analysemessgeräte, Druck- und Temperaturmessgeräte, Feuchte- und Leitfähigkeitsmessgeräte, Dichte und Viskositätsmessgeräte. Die Sensoren dieser Feldgeräte erfassen die entsprechenden Prozessvariablen, z.B. den Füllstand, den Durchfluss, den pH-Wert, die Stoffkonzentration, den Druck, die Temperatur, die Feuchte, die Leitfähigkeit, die Dichte oder die Viskosität.

Unter den Begriff 'Feldgeräte' werden in Verbindung mit der Erfindung aber auch Aktoren, z. B. Ventile oder Pumpen, subsumiert, über die beispielsweise der Durchfluss einer Flüssigkeit in einer Rohrleitung oder der Füllstand in einem Behälter veränderbar ist. Eine Vielzahl solcher Feldgeräte wird von der Firmengruppe Endress + Hauser angeboten und vertrieben.

In der Regel sind Feldgeräte in modernen automatisierungstechnischen Anlagen über Kommunikationsnetzwerke, wie HART- Multidrop, Punkt zu Punkt Verbindung, Profibus, Foundation Fieldbus, mit einer übergeordneten Einheit verbunden, die als Leitsysteme oder Leitwarte bezeichnet wird. Diese übergeordnete Einheit dient zur Prozesssteuerung, zur Prozessvisualisierung, zur Prozessüberwachung sowie zur Inbetriebnahme und zum Bedienen der Feldgeräte. Für den Betrieb von Feldbussystemen notwendige Zusatz-komponenten, die direkt an einen Feldbus angeschlossen sind und die insbesondere zur Kommunikation mit den übergeordneten Einheiten dienen, werden ebenfalls häufig als Feldgeräte bezeichnet. Bei diesen Zusatz-komponenten handelt es sich z. B. um Remote l/Os, Gateways, Linking Devices, Controller oder Wireless Adapter.

Je nach Anwendungsfall müssen die Feldgeräte unterschiedlichsten Sicherheitsanforderungen genügen. Um den jeweiligen Sicherheits-anforderungen, z.B. der IEC61508 (SIL-Standard 'Safety Integrity Level') zu genügen, müssen die Feldgeräte redundant und/oder diversitär ausgelegt sein.

Redundanz bedeutet erhöhte Sicherheit durch doppelte oder mehrfache Auslegung aller sicherheitsrelevanter Hard- und Software-Komponenten. Diversität bedeutet, dass die in den unterschiedlichen Messkanälen befindlichen Hardware-Komponenten, wie z.B. ein Mikroprozessor, von unterschiedlichen Herstellern stammen und/oder dass sie von unterschiedlichem Typ sind. Im Falle von Software-Komponenten erfordert die Diversität, dass die in den Mikroprozessoren gespeicherte Software aus unterschiedlichen Quellen, sprich von unterschiedlichen Herstellern bzw. Programmierern stammt. Durch alle diese Maßnahmen soll sichergestellt werden, dass ein sicherheitskritischer Ausfall des Feldgeräts ebenso wie das Auftreten von gleichzeitig auftretenden systematischen Fehlern bei der Messwertbereitstellung mit hoher Wahrscheinlichkeit ausgeschlossen ist.

Ein Beispiel für eine sicherheitsrelevante Applikation ist die Füllstands-überwachung in einem Tank, in dem eine brennbare oder auch eine nicht brennbare, dafür aber wassergefährdende Flüssigkeit gelagert ist. Hier muss sichergestellt sein, dass die Zufuhr von Flüssigkeit zu dem Tank sofort unterbrochen wird, sobald ein maximal zulässiger Füllstand erreicht ist. Dies wiederum setzt voraus, dass das Messgerät hoch zuverlässig den Füllstand detektiert und fehlerfrei arbeitet.

Zwar ist bei den bekannten Lösungen der Messkanal redundant und/oder diversitär ausgelegt, jedoch stellt der Voter, üblicherweise ein Mikroprozessor, die Achillesferse eines Feldgeräts dar, das hohen und höchsten Sicherheitsanforderungen genügen soll. Der Mikroprozessor ist monolithisch ausgestaltet. Tritt hier ein gefahrbringender Fehler (entsprechend der Nomenklatur des zuvor genannten Standards) auf, so versagt das Feldgerät. Um die Anforderungen von SIL 3 zu erfüllen, darf der Anteil der gefahrbringenden Fehler zu der Anzahl aller möglichen Fehler bei maximal einem Prozent liegen. Mit einem herkömmlichen Mikroprozessor ist dieser Sicherheitslevel nicht zu erreichen.

Um dieses Problem zu lösen, wird in der nicht vorveröffentlichten DE 10 2012 106 652.3, angemeldet am 23.07.2012, ein Feldgerät beschrieben, dessen Voter als Mehrheitsvoter ausgestaltet ist und der drei Stufen umfasst:
- eine Komparatorstufe, die die von den einzelnen Messkanälen gelieferten Ausgangssignale miteinander vergleicht;
- eine Fehlererkennungsstufe, die durch geeignete Verknüpfung der Ausgangssignale der Komparatorstufe einen in einem Messkanal auftretenden Fehler erkennt, und
- eine Ausgangsauswahlstufe.

Die Druckschrift DE102009026785 A1 betrifft ein Feldgerät zur Bestimmung und/ oder Überwachung einer physikalischen oder chemischen Prozessgröße, bestehend aus einem Sensor, der entsprechend einem vorgegebenen Messprinzip arbeitet, und einer Regel-Auswerteeinheit, die die von dem Sensor gelieferten Messdaten/Messwerte in Abhängigkeit von einem in der jeweiligen sicherheitskritischen Anwendung geforderten Sicherheitsstandard entlang einer vorgegebenen Anzahl von redundanten oder diversitären oder redundanten und diversitären Messpfaden aufbereitet und/oder auswertet.

Bislang ist kein Feldgerät bekannt, das die hohe Sicherheitsstufe auch im Bereich des Stromausgangsmoduls z.B. bei einem 4-20mA Zwei- oder Vier-Draht-Feldgerät erfüllt.

Der Erfindung liegt die Aufgabe zugrunde, ein Feldgerät vorzuschlagen, das sich durch eine erhöhte funktionale Sicherheit auszeichnet.

Die Aufgabe wird durch ein Feldgerät zur Bestimmung oder Überwachung einer Prozessgröße in der Automatisierungstechnik nach Anspruch 1 gelöst.

Gemäß einer bevorzugten Ausgestaltung des erfindungsgemäßen Feldgeräts weist jeder Stromeinstellkanal eine Stromeinstelleinheit und eine Stromregelung auf, wobei die Stromeinstelleinheit und die Stromregelung parallel geschaltet sind.

Weiterhin ist vorgesehen, dass der Voter aus mehreren Komponenten besteht, die zumindest teilweise oder in Gänze zweifach redundant ausgelegt sind.

Insbesondere wird vorgeschlagen, dass der Voter ein Mehrheitsvoter ist, der mehrere Voterkanäle aufweist, wobei in jedem Voterkanal folgende Komponenten zu finden sind: eine Komparatorstufe, über die die von den einzelnen Stromeinstellkanälen gelieferten Ausgangssignale miteinander verglichen werden, eine Fehlererkennungsstufe, die durch geeignete Verknüpfung der Ausgangssignale der den Voterkanälen zugeordneten Komparatorstufen eine in einem Messkanal oder in einem Stromeinstellkanal auftretende Fehlfunktion erkennt, und eine Ausschaltstufe, die den Stromeinstellkanal ausschaltet, in dem die Fehlererkennungsstufe eine Fehlfunktion detektiert.

Eine vorteilhafte Weiterbildung des erfindungsgemäßen Feldgeräts sieht vor, dass jeder Voterkanal einen Teil der Komparatorstufe, einen Teil der Fehlererkennungseinheit und einen Teil der Ausschaltstufe umfasst, und dass jeder Voterkanal als integrierter Bestandteil des zugehörigen Messkanals und des zugehörigen Stromeinstellkanals ausgestaltet ist.

Darüber hinaus wird vorgeschlagen, dass die Komparatorstufe für jeden Voterkanal zwei Komparatormodule aufweist, die die Ausgangssignale des zugehörigen Stromeinstellkanals mit den Ausgangssignalen der verbleibenden Stromeinstellkanäle vergleicht.

Bevorzugt handelt es sich bei den Fehlererkennungsstufen jeweils um eine Logikstufe, die aus zwei NAND Gattern aufgebaut ist, wobei an den Eingängen des ersten NAND Gatters die Ausgangssignale der Komparatoren eines ersten Voterkanals anliegen, der einem ausgewählten Messkanal zugeordnet ist, und wobei an dem zweiten NAND Gatter die zu den Eingängen des ersten NAND Gatters redundanten Ausgangssignale der Komparatoren des zweiten Voterkanals und des dritten Voterkanals anliegen, und wobei die Ausgangssignale des ersten NAND Gatters und des zweiten NAND Gatters die Steuersignale für die nachgeschaltete Ausschaltstufe bilden.

Bevorzugt ist jedem Messkanal bzw. jedem Stromeinstellkanal eine eigene Spannungsversorgung zugeordnet. Diese Ausgestaltung hat den Vorteil, dass es bei Wegfall einer der Spannungsversorgungen zu keinem Totalausfall des Feldgeräts kommt.

Als besonders vorteilhaft wird es erachtet, wenn ein Alarmstrommodul vorgesehen ist, das so ausgestaltet ist, dass es einen Fehlerstrom, z.B. von 22mA, setzt, wenn in zumindest zwei Messkanälen bzw. in zwei Stromeinstellkanälen gleichzeitig eine Fehlfunktion auftritt. Hierdurch wird verhindert, dass die Stromschnittstelle instabil wird.

Weiterhin wird vorgeschlagen, dass die Kontroll-/Auswerteeinheit mit Messkanälen bzw. Stromeinstellkanälen die zugehörigen Komponenten des Voters bzw. der Voterkanäle zumindest teilweise als rekonfigurierbarer Logikbaustein mit mehreren partiell dynamisch rekonfigurierbaren Funktionsmodulen in den Messkanälen bzw. in den Stromeinstellkanälen ausgebildet ist.

Darüber hinaus ist eine Rekonfigurationssteuerung vorgesehen, die Funktionsmodule in den Messkanälen oder den Stromeinstellkanälen in Abhängigkeit von der jeweils definierten sicherheitskritischen Anwendung so konfiguriert, dass das Feldgerät dem geforderten Sicherheitsstandard genügt.

Insbesondere ist der Rekonfigurationssteuerung zumindest ein Mikroprozessor zugeordnet, der die Funktionsmodule eines Messkanals oder eines Stromeinstellkanals, in dem ein Fehler detektiert wird, partiell dynamisch rekonfiguriert.

Im Zusammenhang mit der Erfindung wird weiterhin vorgeschlagen, dass zumindest einer der Messkanäle und/oder der Stromeinstellkanäle analogbasiert in einem FPAA konfiguriert ist.

Es wird zusätzlich angeregt, dass die einzelnen Messkanäle oder Stromeinstellkanäle so voneinander beabstandet sind, dass eine Temperatur- und/oder eine Spannungsänderung in einem Messkanal oder Stromeinstellkanal keinen Einfluss auf einen benachbarten Messkanal oder Stromeinstellkanal haben/hat.

Bevorzugt ist der zumindest eine Mikroprozessor in einem statischen Bereich des Logikbausteins permanent konfiguriert.

Die Erfindung wird anhand der nachfolgenden Figuren näher erläutert. Es zeigt:
Fig. 1: ein Blockschaltbild eines aus dem Stand der Technik bekannten Stromausgangsmoduls,
Fig. 2: eine schematische Darstellung einer Ausführungsform des erfindungsgemäßen Feldgeräts mit Sensor, dreifach redundanten Messkanälen, dreifach redundanten Stromeinstellkanälen, zweifach redundanten Voterkanälen und zweifach redundanten Ausschaltstufen,
Fig. 3: eine bevorzugte Ausgestaltung einer bei dem erfindungsgemäßen Feldgerät einsetzbaren redundanten Stromschnittstelle mit redundantem Voter,
Fig. 4: eine vergrößerte Darstellung der erfindungsgemäßen Stromschnittstelle aus Fig. 3,
Fig. 5: eine vergrößerte Darstellung der erfindungsgemäßen Stromschnittstelle mit den zugehörigen Ausschaltstufen für die Stromeinstellkanäle aus Fig. 3,
Fig. 6: eine vergrößerte Darstellung des zweifach redundanten, sicheren Voters mit Komparatorstufen, Fehlererkennungsstufen und Ausschaltstufen aus Fig. 3, und
Fig. 7: eine vergrößerte Darstellung des zweifach redundanten, sicheren Voters mit Fehlererkennungsstufen, Ausschaltstufen und einem Alarmstrommodul aus Fig. 3.

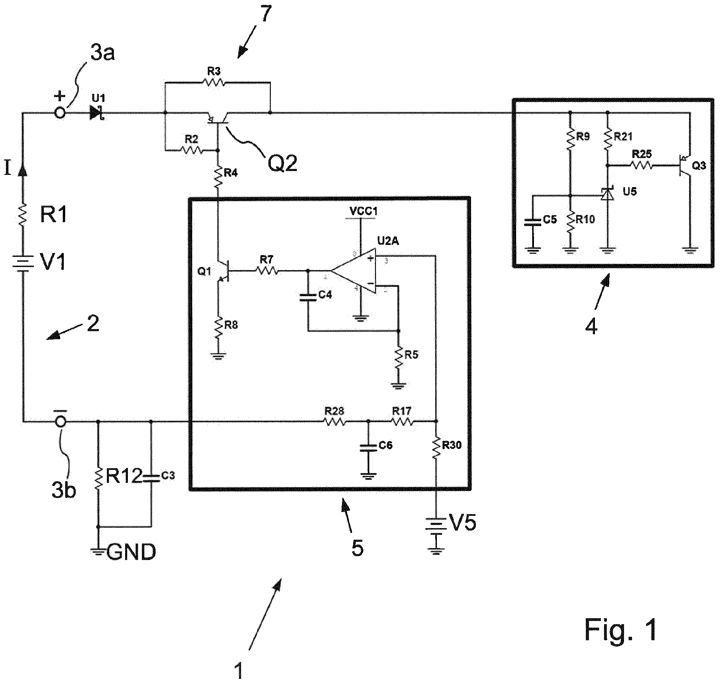

Fig. 1 zeigt ein Blockschaltbild eines aus dem Stand der Technik bekannten analogen Stromausgangsmoduls 1. Das Stromausgangsmodul 1 stellt den Strom I auf einer Stromschleife 2 bzw. einer Zweidrahtleitung ein. Über die Stromschleife 2 ist das Feldgerät bzw. hier das Messgerät, bestehend aus Sensor S und einer Kontroll-/Auswerteeinheit 6, mit einer entfernt angeordneten Auswerte-/Ausgabeeinheit verbunden. Feldgeräte bzw. hier Messgeräte zur Bestimmung oder Überwachung einer Prozessgröße in der Automatisierungstechnik erfassen die Prozessgröße und übermitteln die erfassten Messwerte über die Stromschleife 2 oder eine digitale Kommunikation an eine Empfangseinheit, z.B. die bereits erwähnte Auswerte-/Ausgabeeinheit.

Der über die Stromschleife 2 fließende Strom I wird über eine Stromregelung 5 und eine Stromeinstelleinheit 7 so eingestellt, dass der eingestellte Strom I die ermittelte Prozess- oder Stellgröße eindeutig und mit hoher Genauigkeit repräsentiert. Üblicherweise wird in der Automatisierungstechnik der 4-20mA Standard verwendet. Hierbei repräsentiert ein Strom von 4 mA in der Stromschleife z.B. den minimalen Wert der Prozessgröße und ein Strom von 20 mA z.B. den maximalen Wert der Prozessgröße. Die 4-20mA Technik ist weitgehend störunempfindlich, sie ist im explosionsgefährdeten Bereich einsetzbar und findet bei industriellen Anwendungen häufig Verwendung.

Etabliert hat sich in der Automatisierungstechnik die sog. Zweileitertechnik, bei der über die Stromschleife 2 nicht nur die Mess- oder Stellwerte übermittelt werden, sondern über die der Sensor/Aktor auch mit Energie versorgt wird. Für die Mess-/Stellaufgabe steht dem Feldgerät somit nur eine begrenzte Leistung zur Verfügung. Diese Leistung hängt von der Versorgungsspannung und dem den aktuellen Messwert/Stellwert repräsentierenden Strom ab. Um eine dauernde Verfügbarkeit des Feldgeräts zu gewährleisten, sind herkömmliche Feldgeräte so dimensioniert, dass sie mit der minimal zur Verfügung stehenden Leistung auskommen, d.h. sie benötigen für den Mess- oder Stellbetrieb nur die bei minimalem Strom und minimaler Spannung anstehende Leistung. Steht mehr Leistung zur Verfügung, wird diese zusätzliche Leistung üblicherweise in einer Stromsenke 4 in Verlustleistung umgesetzt.

Das in Fig. 1 gezeigte Stromausgangsmodul 1 ist beispielsweise in einem 4-20mA Transmitter, also im Elektronikteil, eines Feldgeräts implementiert. Das Stromausgangsmodul 1 stellt den Strom I ein, der über die Stromschleife 2 fließt. Der Strom I wird durch die Spannungsquelle V1 und den Widerstand R1 - links von dem positiven Anschluss 3a und dem negativen Anschluss 3b - repräsentiert. Die Spannungsquelle V5 repräsentiert den Sollwert der Stromschleifenregelung 5.

Der Transistor Q2 der Stromeinstelleinheit 7 steuert den Strom, der von dem positiven Anschluss 3a zu der Stromsenke 4 fließt. Die Stromsenke 4 liegt auf Bezugspotential, vorzugsweise auf Masse GND. Der Strom fließt zum negativen Anschluss 3b über den Messwiderstand R12. Hierdurch wird eine Spannung zwischen dem negativen Anschluss und Masse GND erzeugt, die proportional zum fließenden Strom ist. Diese Spannung wird als Referenzspannung zur Steuerung des Transistors Q2 und somit zur Einstellung des Stroms in der Stromschleife 2 verwendet. Die Regelung des eingestellten Stroms erfolgt über die Stromschleifenregelung 5. Kernstück der Stromschleifenregelung 5 ist der Operationsverstärker U2A. Der Operationsverstärker U2A steuert den Transistor Q1 und auch den Transistor Q2 derart, dass am Plusausgang des Operationsverstärkers U2A die Summe der Spannungen gleich Null ist. Ist diese Bedingung erfüllt, so ist der Strom I durch den Messwiderstand R12 und in der Stromschleife 2 proportional zu dem Sollwert, der durch die Spannung V5 repräsentiert wird.

Erfolgt die Energieversorgung des Feldgeräts über dieselbe Stromschleife 2, die auch zur Übermittelung der Mess- oder Stellwerte des Feldgeräts verwendet wird, so dient die Stromsenke 4 dazu, den Strom, der von dem Feldgerät nicht benötigt wird, gegen Masse GND abzuleiten und somit in Verlustleistung umzuwandeln. Erfolgt die Energieversorgung des Feldgeräts über eine separate Stromleitung, so kann die Stromsenke 4 entfallen, bzw. sie kann durch eine Kurzschlussschaltung ersetzt werden.

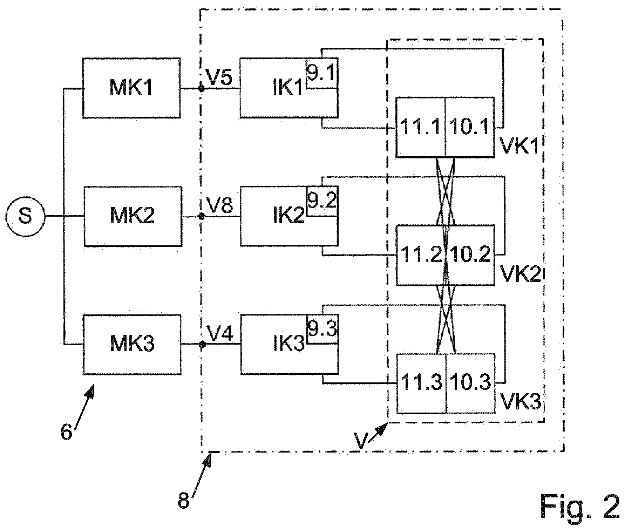

Fig. 2 zeigt eine schematische Darstellung des erfindungsgemäßen Feldgeräts mit einem Sensor S, dreifach redundanten Messkanälen MK1, MK2, Mk3, dreifach redundanten Stromeinstellkanälen IK1, IK2, IK3 und dreifach redundanten Voterkanälen VK1, VK2, Vk3. Der Voter V umfasst die Voterkanäle VK1, VK2, VK3, wobei den Voterkanälen VK1, VK2, VK3 zumindest Teile der Komparatorstufen 11.1, 11.2, 11.3, der Fehlererkennungsstufen 10.1, 10.2, 10.3 und der Ausschaltstufen 9.1, 9.2, 9.3 zugeordnet sind. Die redundante analoge Stromschnittstelle 8 umfasst die Stromeinstellkanäle IK1, IK2, IK3 und die Voterkanäle VK1, VK2, VK3.

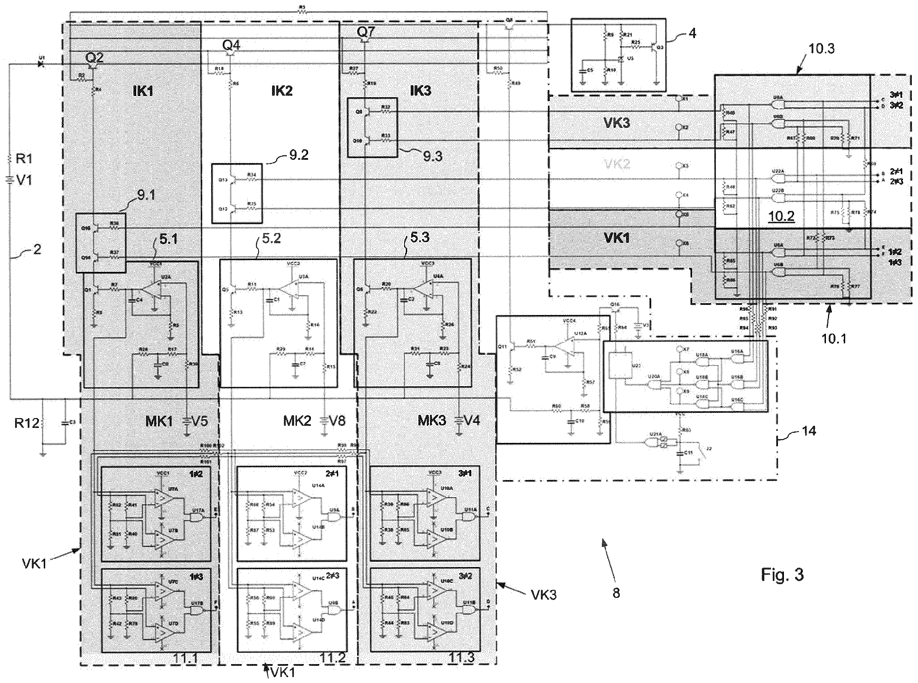

Fig. 3 zeigt eine bevorzugte Ausgestaltung einer bei dem erfindungsgemäßen Feldgerät einsetzbaren redundanten Stromschnittstelle 8 mit sicherem redundantem Voter V. Das erfindungsgemäße Feldgerät und insbesondere die analoge Stromschnittstelle 8 sind so ausgestaltet, dass sie den hohen Sicherheitsanforderungen in einer gewünschten sicherheitskritischen Anwendung, z.B. SIL 3, genügen. Die Spannung V1 und der Widerstand R1 repräsentieren die Spannungsversorgung, über die die 4-20mA Stromschleife 2 mit Energie versorgt wird. Beispielsweise ist die Spannungsversorgung in eine entfernt angeordnete Ausgabe-/Auswerteeinheit, z.B. eine SPS integriert.

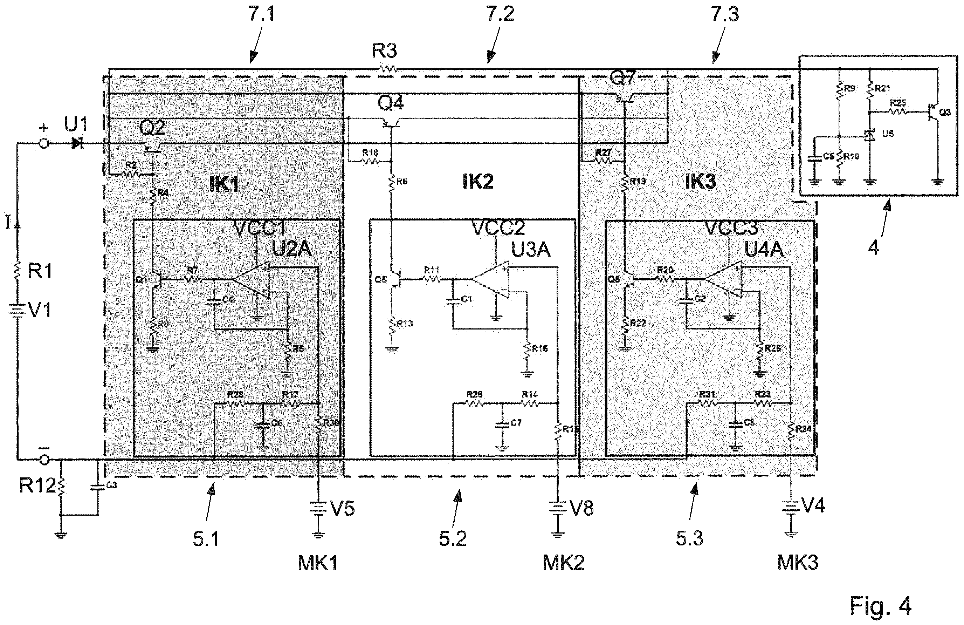

Nicht konkret dargestellt ist in Fig. 3 die Kontroll-/Auswerteeinheit 6, die die vom Sensor S gelieferten Ausgangssignale V5, V8, V4 - im Falle eines Sensors S repräsentieren die Ausgangssignale V5, V8, V4 insbesondere Messwerte - entlang von zumindest drei redundanten und/oder diversitär ausgelegten Messkanälen MK1, MK2, MK3 aufbereitet und auswertet. Die in Fig. 3 gezeigten wesentlichen Komponenten der erfindungsgemäßen Stromschnittstelle 8 sind in den nachfolgenden Figuren Fig. 4 - 7 im Detail dargestellt und beschrieben.

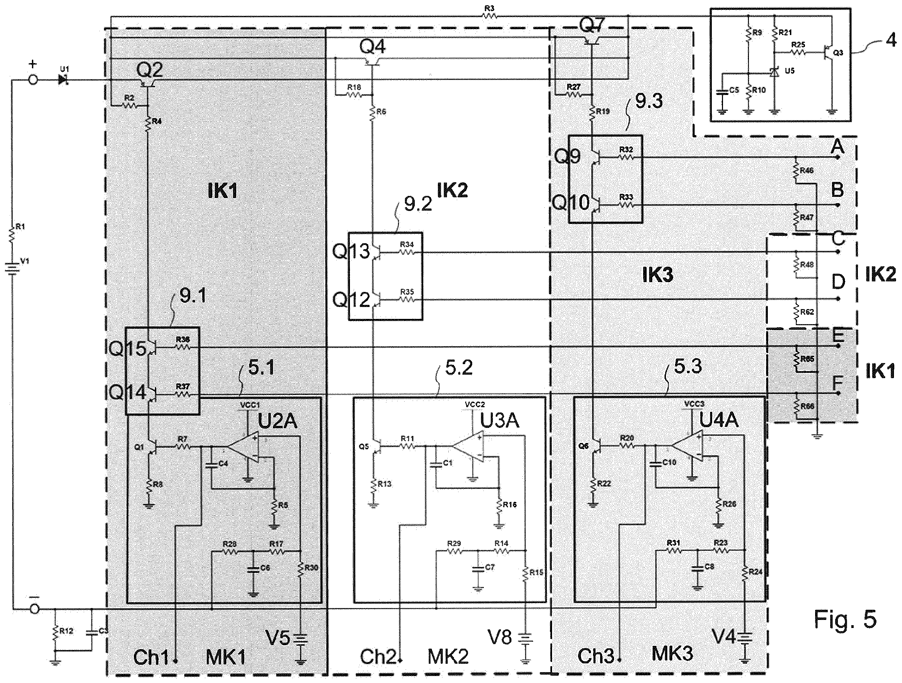

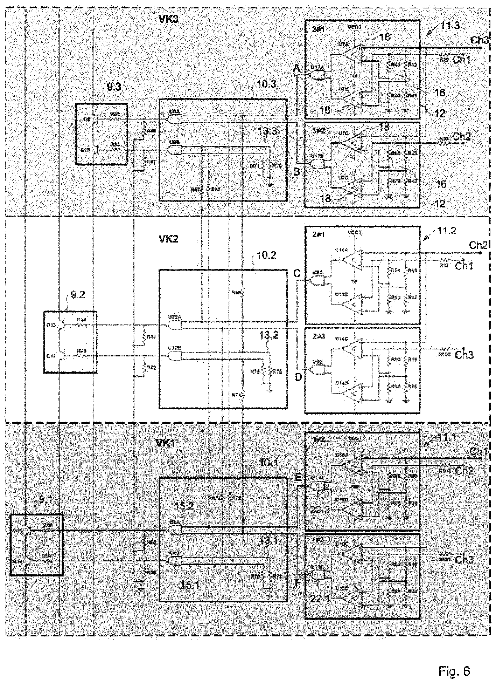

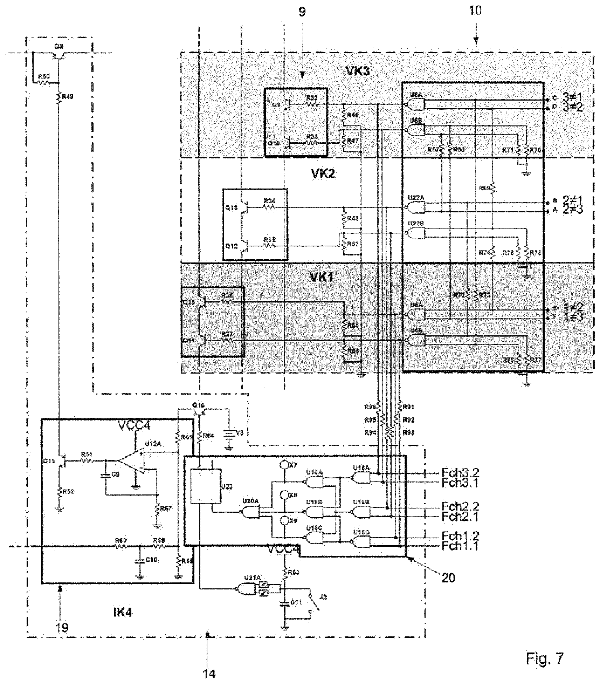

Die in Fig. 3 dargestellte Ausgestaltung der erfindungsgemäßen redundanten Stromschnittstelle 8, über die ein die Prozessgröße repräsentierender Strom I auf der Stromschleife 2 eingestellt wird, weist die folgenden Komponenten auf:
- drei parallel geschaltete Stromeinstellkanäle IK1, IK2, IK3 (sh. Fig. 4);
- einen zweifach redundanten Voter V, der eine Fehlfunktion in einem der Messkanäle MK1, MK2, MK3 und/oder der Stromeinstellkanäle IK1, IK2, IK3 erkennt (sh. Fig. 6);
- eine dreifach redundante Ausschaltstufe 9.1, 9.2, 9.3, über die ein Stromeinstellkanal IK1, IK2, IK3 abgeschaltet wird, wenn der Voter V in dem Messkanal MK1, MK2, MK3 oder in dem zugehörigen Stromeinstellkanal IK1, IK2, IK3 eine Fehlfunktion Fch1, Fch2, Fch3 erkennt (sh. Fig. 5);
- ein Alarmstrommodul 14, das einen Alarmstrom stellt, wenn in zumindest zwei Messkanälen MK1, MK2, MK3 und/oder Stromeinstellkanälen IK1, IK2, IK3 gleichzeitig eine Fehlfunktion Fch auftritt (sh. Fig. 7).

Die analoge, redundant ausgelegte Stromschnittstelle 8 ist in Fig. 4 im Detail in vergrößerter Darstellung gezeigt und beschrieben. Die Einstellung des Stroms I erfolgt über die den Stromeinstelleinheiten 7.1, 7.2, 7.3 zugeordneten parallel geschalteten Transistoren Q2, Q4, Q7. Die Sollwerte für die Ansteuerung der Transistoren Q2, Q4, Q7 durch die drei parallel geschalteten Stromschleifenregelungen 5.1, 5.2, 5.3 entsprechen den Ausgangssignalen V5, V8, V4 der drei nicht gesondert in Fig. 4 dargestellten Messkanäle MK1, MK2, MK3. Über die Transistoren Q2, Q4, Q7 wird der Strom gesteuert, der in der Stromsenke 4 in Verlustleistung umgesetzt wird.

Im gezeigten Fall ist den Operationsverstärkern U2A, U3A, U4A der Stromschleifenregelungen 5.1, 5.2, 5.3 jeweils eine eigene Spannungsversorgung VCC1, VCC2, VCC3 zugeordnet. Diese Ausgestaltung hat den Vorteil, dass bei Wegfall einer der Spannungsversorgungen kein Totalausfall des Feldgeräts auftritt.

Über die Schattierungen in Fig. 4 ist die Zuordnung der einzelnen Komponenten der analogen Stromschnittstelle 8 zu einem der drei Stromeinstellkanäle IK1, IK2, IK3 gekennzeichnet. Diese Schattierungen sind auch in den nachfolgenden Figuren und in Fig. 3 zu sehen. Die Schattierungen markieren auch hier die unterschiedlichen Kanäle, wobei jedem Kanal bevorzugt eine eigene Spannungsversorgung zugeordnet ist. Die einzigen Komponenten, die nicht redundant ausgelegt sind, sind der Widerstand R12 und die Diode U1, die dafür Sorge trägt, dass der Strom nur in die gewünschte Richtung fließen kann. Im gezeigten Fall ist die Stromsenke 4 gleichfalls nur einfach ausgelegt; allerdings kann die Stromsenke 4 ebenso wie die weiteren Komponenten der analogen Stromschnittstelle 8 auch dreifach redundant ausgelegt sein, wobei die Stromsenken 4 dann parallel geschaltet sind. Hierdurch wird auch in diesem Teil der Schaltung die Sicherheit erhöht.

Bei der in Fig. 4 gezeigten Schaltung wird der Ausgangsstrom I, der in der Stromschleife 2 fließt, automatisch über den Stromeinstellkanal IK vorgegeben, in dem der größte Strom eingestellt ist. Die Schaltung ist sozusagen so ausgelegt, das der Stromeinstellkanal IK mit dem größten eingestellten Strom gewinnt. Das erfindungsgemäße Feldgerät hat insgesamt die Genauigkeit des Messkanals MK auf, der die Messwerte/Stellwerte mit der geringsten Genauigkeit aufbereitet und auswertet. Üblicherweise ist dieser Messkanal der analog ausgestaltete Messkanal MK.

Tritt in einem der Messkanäle MK oder in einem der Stromeinstellkanäle IK eine Fehlfunktion auf, so stellt der entsprechende Stromeinstellkanal IK einen falschen Strom ein. Ist dieser falsch eingestellte Strom höher als der Strom, der in den beiden korrekt eingestellten Stromeinstellkanälen IK eingestellt ist, dann wird in der Stromschleife 2 der falsche Strom eingestellt und das Feldgerät liefert einen falschen Messwert. Als Folge des falsch eingestellten Stromwertes wird auf der Stromschleife ein fehlerhafter Messwert/Stellwert übertragen. Um die angestrebte hohe Sicherheitsstufe auch noch im Falle des Auftretens einer Fehlfunktion Fch zu gewährleisten, ist jedem Stromeinstellkanal IK1, IK2, IK3 bzw. jeder Stromeinstelleinheit 7.1, 7.2, 7.3 eine Ausschaltstufe 9.1, 9.2, 9.3 zugeordnet.

Die Ausschaltstufen 9.1, 9.2, 9.3 sind in Fig. 5 zusätzlich zu den Stromregelungen 5.1, 5.2, 5.3 und den Stromeinstelleinheiten 7.1, 7.2, 7.3 dargestellt. Die Ausschaltstufen 9.1, 9.2, 9.3 werden von dem Voter V durch die Signale A, B, C, D, E, F gesteuert. Sobald der Voter V eine Fehlfunktion Fch in einem Messkanal MK1, MK2, MK3 oder in einem Stromeinstellkanal IK1, IK2, IK3 detektiert, - dies ist der Fall, wenn der entsprechende Mess- oder Stromeinstellkanal MK, IK ein Ausgangssignal erzeugt, das von den Ausgangssignalen der beiden verbleibenden Messkanäle MK oder Stromeinstellkanäle IK abweicht -, dann steuert der Voter V über die Ausgangssignale A, B, C, D, E, F die Abschaltung des fehlerhaften Stromeinstellkanals IK. Die Ausschaltstufen 9.1, 9.2, 9.3 sind in jedem der Mess-/Stromeinstellkanal MK, IK zweifach redundant ausgestaltet, da der Voter V zweifach redundant in jedem der Mess-/Stromeinstellkanäle MK, IK ausgebildet ist.

Bevorzugt besteht jede Ausschaltstufe 9.1, 9.2, 9.3 aus einfachen Transistoren Q9, Q10; Q12, Q13; Q14, Q15, die das Steuersignal, und somit den Basisstrom der für die Stromregelung verantwortlichen Transistoren Q2, Q4, Q7 unterbrechen. Sobald der Basisstrom unterbrochen ist, ist der Transistor Q2, Q4, Q7 offen, und es fließt kein Strom in der Stromschleife 2. Die beiden verbleibenden Stromeinstellkanäle IK übernehmen in diesem Fall nahtlos die Funktion der Stromeinstellung auf der Stromschleife 2; die Einstellung des Stroms auf der Stromschleife 2 erfolgt automatisch über einen der verbleibenden Stromeinstellkanäle IK.

Die Übernahme der Einstellfunktion durch einen der verbleibenden Stromeinstellkanäle IK kann folgendermaßen genutzt werden: Wie aus Fig. 5, insbesondere aber aus Fig. 6 ersichtlich, sind in jeder Ausschaltstufe 9.1, 9.2, 9.3 zwei Transistoren Q14, Q15; Q12, Q13; Q9, Q10 angeordnet. Hierdurch ist es dem Voter V möglich, die Stromeinstellkanäle IK1, IK2, IK3 unabhängig voneinander abzuschalten. Dem Voter V müssen die Ausgangssignale der Stromeinstellkanäle Ch1, Ch2, Ch3 zur Verfügung gestellt werden. Um zu sicherzustellen, dass auch bei den analogen Komponenten des Stromeinstellmoduls 1 eine Fehlererkennung erfolgt, müssen die Ausgänge der Stromstelleinheiten 5.1, 5.2, 5.3 dem Voter V zur Verfügung gestellt werden. Da es nicht möglich ist, direkt die Ströme an den Transistoren Q2, Q4, Q7 zu messen, werden die Ausgangssignale der Operationsverstärker U2A, U3A, U4A verwendet. Die entsprechenden Ausgangssignale sind in den Figuren Fig. 5 und Fig. 6 mit Ch1, Ch2, Ch3 gekennzeichnet.

Wie bereits zuvor erwähnt, ist es mit der erfindungsgemäßen Lösung möglich, den korrekten Betrieb des Feldgeräts auch dann noch zu gewährleisten, wenn ein Mess- oder Stromeinstellkanal MK, IK ausfällt. Sobald in einem der Mess- oder Stromeinstellkanäle MK, IK ein von dem Sollwert abweichender Stromwert ermittelt wird und somit eine Fehlfunktion Fch auftritt, wird der fehlerbehaftete Mess-oder Stromeinstellkanal MK, IK ausgeschaltet. Seine Funktion wird automatisch von einem der verbleibenden Mess- oder Stromeinstellkanäle MK, IK übernommen.

Um die Fehlfunktion zu erkennen, ist jedem Stromeinstellkanal IK1, IK2, IK3 ein Voterkanal VK1, VK2, VK3 zugeordnet. Jeder Voterkanal VK1, VK2, VK3 ist Teil des zweifach redundanten Voters V und besteht aus einer Komparatorstufe 11.1, 11.2, 11.3 und einer Fehlererkennungsstufe 10.1, 10.2, 10.3. Jede Komparatorstufe 11 weist zwei Komparatormodule 12 auf, die wiederum zwei Komparatoren 18 und zwei Spannungsteiler 16 aufweisen. Da es sich bei den Signalen, die den Komparatoren 18 zugeführt werden, um analoge Signale handelt, müssen auch die Komparatoren 18 als analoge Komponenten ausgelegt sein. Dies hat den Vorteil, dass eine Fehlfunktion Fch unmittelbar nach ihrem Auftreten erkannt wird und das Umschalten auf einen der verbleibenden Stromeinstellkanäle IK gleichfalls ohne Zeitverzögerung erfolgen kann. Hierdurch werden ein nahtloser Übergang und damit ein kontinuierlicher Betrieb des Feldgeräts sichergestellt.

Jedes Komparatormodul 12 besteht, wie bereits gesagt, aus zwei analogen Komparatoren 18 und zwei Spannungsteilern 16. Die Toleranz, die bei einem Vergleich der Genauigkeiten der Kanäle gegeben ist, entspricht im Wesentlichen der Genauigkeit des Messkanals MK mit der geringsten Genauigkeit. Bevorzugt liegt die Toleranz bei einem Prozent des aktuellen Messwertes. Der Messkanal MK mit der geringsten Genauigkeit ist prinzipiell der analoge Messkanal MK. Der Ausgang einer Komparatorstufe 11 signalisiert die Differenz zwischen zwei Signalen, die größer als 1% ist.

In einer Formel lässt sich dies wie folgt ausdrücken:
(CH3 ≠ CH1) ist gegeben, wenn (CH3 > Ch1x0.99)n(Ch1 > Ch3x0.99), wobei die Toleranz 1,01%/-1% beträgt.
Darüber hinaus müssen für die korrekte Berechnung auch die Toleranzen der Komparatoren 12 und der Widerstände der Spannungsteiler 16 berücksichtigt werden. Unter der Annahme, dass die Komponenten ein ideales Verhalten und somit keine Abweichungen aufweisen, wird der Faktor 0,99 über die Bemessung der Widerstände der Spannungsteiler 16 realisiert. Beispielsweise beträgt R40 470kΩ und R41 4,7kΩ.

Die Komparatorstufen 11 sind mit den Fehlererkennungsstufen 10 verbunden, die erkennen, in welchem der Mess- oder Stromeinstellkanäle MK, IK eine Fehlfunktion aufgetreten ist. Gilt beispielsweise (Ch1≠Ch2) ∧ (Ch1≠Ch3), dann ist die Fehlfunktion im Kanal IK1 aufgetreten. Die Fehlererkennungsstufe 10.1 steuert die entsprechende Ausschaltstufe 9.1 derart, dass die Stromstelleinheit 7.1 des Kanals IK1, in dem die Fehlfunktion vorliegt, außer Kraft gesetzt wird.

Wie aus den Figuren Fig. 6 und Fig. 7 ersichtlich ist, ist der Voter V zweifach redundant ausgelegt. Der Voter V erlaubt die zuverlässige Detektion einer Fehlfunktion Fch, der in einem der Stromeinstellkanäle IK auftritt, sogar in dem Fall, wenn die Fehlfunktion Fch in einer Komponente des Voters V auftritt, also entweder in der Komparatorstufe 11, der Fehlererkennungsstufe 10 oder in der Ausschaltstufe 9 eines jeden Stromeinstellkanals IK. Falls irgendeine Komponente in einem der Stromeinstellkanäle IK ausfällt, so wird die Einstellfunktion von einem der verbleibenden Stromeinstellkanäle IK übernommen - die Funktionstüchtigkeit des Feldgeräts ist somit auch bei Auftreten einer Fehlfunktion in einem der Stromeinstellkanäle IK sichergestellt. Selbstverständlich werden erfindungsgemäß auch Fehler erkannt, die in den vorgeschalteten Messkanälen MK auftreten.

Der analog ausgestaltete zweifach redundante Voter V ist so ausgestaltet, dass er auch bei Ausfall der Spannungsversorgung in einem Kanal IK weiterarbeitet. Somit bleibt das Feldgerät betriebsbereit. Versagt eine Spannungsversorgung, so fällt Stromregelung 5/Stromeinstelleinheit 7 des betroffenen Kanals IK aus. Die Funktion des betroffenen Kanals IK wird von einem der verbleibenden Kanäle IK übernommen. Da die Fehlererkennungsstufe 10 eines Kanals IK Information von den Komparatoren 12 der anderen Kanäle IK erhält, ist es wichtig, dass ein Kanal IK bei Wegfall der Spannung die anderen Kanäle IK nicht beeinflusst. Daher ist die Fehlererkennungseinheit 10 mit Pull-Down Widerständen 13 versehen. Jeder Pull Down Widerstand 13 ist zwischen eine Signalleitung und Massepotential angeschlossen und sorgt dafür, dass das Signal auf einen definierten Pegel gesetzt wird, wenn ein Stromeinstellkanal IK ausgeschaltet wird und die Steuerung aufgrund des Ausschaltens eines Stromeinstellkanals IK ausfällt. Solange die Steuerung korrekt arbeitet, haben die Pull Down Widerstände 13 keinen Einfluss auf das Signal, da sie relativ hochohmig sind. Die Pull Down Widerstände 13 stellen sicher, dass ein korrekt arbeitender Stromeinstellkanal IK nicht ausgeschaltet wird, wenn die Spannungsversorgung in einem der anderen Stromeinstellkanäle IK ausfällt. Darüber hinaus sind in jedem Stromeinstellkanal IK Spannungsüberwachungselemente vorgesehen, die Über- oder Unterspannungen detektieren. Ein Spannungsüberwachungselement kann bei Auftreten einer Fehlfunktion die Energieversorgung des betroffenen Stromeinstellkanals IK abschalten.

Nachfolgend sind noch einige Detailinformationen zu Fig. 6 angeführt. Jeder Voterkanal VK umfasst einen Teil der Komparatorstufe 11, einen Teil der Fehlererkennungsstufen 10 und einen Teil der Ausschaltstufe 9. Jeder Voterkanal VK ist als integrierter Bestandteil des zugehörigen Messkanals MK und des zugehörigen Stromeinstellkanals IK ausgestaltet.

Bezogen auf den Voterkanal VK1, weist die Komparatorstufe 11.1 zwei Komparatormodule 12 auf, die die Ausgangssignale Ch1 des zugehörigen Stromeinstellkanals IK1 mit den Ausgangssignalen Ch2, Ch3 der verbleibenden Stromeinstellkanäle IK2, IK3 vergleichen. Die Ausgangssignale der beiden Komparatoren 18 von jedem der Komparatormodule 12 bilden die Eingangssignale für das nachgeschaltete NAND Gatter 22.1 und das nachgeschaltete NAND Gatter 22.2. Die Ausgangssignale F, E des NAND Gatters 22.1 und des NAND Gatters 22.2 werden der Fehlererkennungsstufe 10.1 zugeleitet.

In der der Komparatorstufe 11.1 nachgeschalteten Fehlererkennungsstufe 10.1 wird ermittelt, in welchem der Mess- oder Stromeinstellkanäle MK, IK eine Fehlfunktion aufgetreten ist. Bei den Fehlererkennungsstufen 10.1, 10.2, 10.3 handelt es sich jeweils um eine Logikstufe, die aus zwei NAND Gattern 15.1, 15.2 aufgebaut ist. Betrachten wir im Folgenden wieder den ersten Voterkanal VK1 etwas genauer: An den Eingängen des ersten NAND Gatters 15.2 liegen die Ausgangssignale E, F der Komparatorstufe 11.1 des ersten Voterkanals VK1 an. Der erste Voterkanal VK1 ist dem ersten Messkanal MK1 zugeordnet. An den Eingängen des zweiten NAND Gatters 15.1 liegen die redundanten Ausgangssignale B, D der Komparatorstufen 11.2, 11.3 des zweiten Voterkanals VK2 und des dritten Voterkanals VK3 an. Die Ausgangssignale des ersten NAND Gatters 15.2 und des zweiten NAND Gatters 15.1 bilden die Steuersignale für die nachgeschaltete Ausschaltstufe 9.1. Solange zumindest ein Eingangssignal des ersten NAND Gatters 15.2 und zumindest ein Eingangssignal des zweiten NAND Gatters 15.1 auf dem logisch "0" Zustand sind, passiert nicht. Sobald beide Eingangssignale des ersten NAND Gatters 15.2 oder beide Eingangssignale des zweiten NAND Gatters 15.1 auf dem logisch "1" Zustand sind, wird der entsprechende Stromeinstellkanal IK1 durch die entsprechende Ausschaltstufe 9.1 unmittelbar abgeschaltet. Analoges gilt für die beiden weiteren Stromeinstellkanäle VK2, VK3.

Ist die Kontroll-/Auswerteeinheit 6 als dynamisch rekonfigurierbarer oder als rekonfigurierbarer oder einfach nur als FPGA ausgeführt und sind zwei Kanäle MK, IK in dem FPGA implementiert, so sind an eine Spannungsversorgung jeweils zwei Kanäle MK, IK angeschlossen. Daher kann die Stromversorgung von einem einzelnen Kanal MK, IK nicht abgeschaltet werden.

Dargestellt ist das Alarmstrommodul 14 zusammen mit den Fehlererkennungsstufen 10.1, 10.2, 10.3 und den Ausschaltstufen 9.1, 9.2, 9.3 in Fig. 7. Das Alarmstrommodul 14 ist so ausgestaltet, dass es mehrfach auftretende Fehlfunktionen Fch in unterschiedlichen Messkanälen MK oder Stromeinstellkanälen IK detektieren kann. Im Prinzip entspricht das Alarmstrommodul 14 einem vierten Stromeinstellkanal IK4, der so getriggert werden kann, dass er einen Fehlerstrom von ≥22 mA, den sog. Alarmstrom, setzt. Die Triggerung erfolgt über die die Steuerung 20 für die Alarmstromregelung 19. Da dieser Alarmstrom in einer 4-20mA Stromschleife größer ist als alle anderen in der analogen Stromschnittstelle 8 fließenden Ströme, übernimmt er automatisch die Steuerung. Das Alarmstrommodul 14 wird bevorzugt von einer eigenen Spannungsversorgung VCC4 gespeist.

Das Alarmstrommodul 14 wird nach einem Algorithmus gesteuert, der in den folgenden Formeln zusammengefasst und in Fig. 7 durch eine Logikstufe realisiert ist. Ein Alarmstrom wird gesetzt, wenn in zumindest zwei Kanälen gleichzeitig eine Fehlfunktion auftritt. Hierbei kennzeichnet FchX.Y=1 einen Fehler im Mess-/Stromeinstellkanal X, der von der Fehlererkennungs-einheit Y detektiert wird. Es gilt:
((Fch1.1∨Fch1.2)∧((Fch2.1 vFch2.2))∨
((Feh1.1 ∨Fch1.2)∧((Fch3.1vFch3.2))∨
((Fch2.1∨Fch2.2)∧((Fch3.1∨Fch3.2))

Über das Alarmstrommodul 14 werden somit zumindest zwei gleichzeitig auftretende Fehler erkannt, die in zwei verschiedenen Messkanälen MK und/oder Stromeinstellkanälen IK auftreten. Das Alarmstrommodul 14 kann auch durch andere Module getriggert werden, wie beispielsweise durch ein Spannungsüberwachungselement oder durch Rekonfigurationssteuerungen. Diese Ausgestaltungen sind in Fig.7 nicht gesondert dargestellt. Die Signale der Fehlererkennungsstufen 10 werden bevorzugt an die Rekonfigurations-steuerung weitergeleitet, die die Rekonfiguration der fehlerhaften Messkanäle MK veranlasst. Dargestellt und beschrieben sind diese in der bereits zuvor erwähnten DE 10 2012 106 652.3 in den Figuren Fig. 1, Fig. 2 und Fig. 3.
Die wesentlichen Unterschiede sind mit Bezug auf die vorliegende Erfindung darin zu sehen, dass der Voter V bei der vorliegenden Erfindung in der analogen Stromschnittstelle 8 implementiert ist und dass die Stromschnittstelle 8 redundant ist.

### Bezugszeichenliste

- 1: analoges Stromausgangsmodul
- 2: Stromschleife
- 3: Anschluss
- 4: Stromsenke
- 5: Stromregelung
- 6: Kontroll-/Auswerteeinheit
- 7: Stromeinstelleinheit
- 8: erfindungsgemäße analoge Stromschnittstelle bzw. erfindungsgemäßes analoges Stromausgangsmodul
- 9: Ausschaltstufe
- 10: Fehlererkennungsstufe
- 11: Komparatorstufe
- 12: Komparatormodul
- 13: Pull-Down Widerstand
- 14: Alarmstrommodul
- 15: NAND Gatter
- 16: Spannungsteiler
- 17: Mikroprozessor
- 18: Analog Komparator
- 19: Alarmstromregelung
- 20: Steuerung für die Alarmstromregelung
- 22: NAND Gatter

## Patentansprüche

1. Feldgerät zur Bestimmung oder Überwachung einer Prozessgröße in der Automatisierungstechnik, wobei das Feldgerät einem Sicherheitsstandard genügt, der in einer vorgegebenen sicherheitskritischen Anwendung gefordert ist, mit einem Sensor, der nach einem definierten Messprinzip arbeitet, und mit einer Kontroll-/Auswerteeinheit (6), die die vom Sensor gelieferten Messdaten entlang von zumindest drei redundanten und/oder diversitär ausgelegten Messkanälen (MK) aufbereitet und auswertet, und
wobei eine analoge Stromschnittstelle (8) vorgesehen ist, über die ein die Prozessgröße repräsentierender Strom über eine Zweidrahtleitung einstellbar ist,
wobei die analoge Stromschnittstelle (8) dreifach redundant ausgelegt ist und wobei der analogen Stromschnittstelle (8) folgende Komponenten zugeordnet sind:
- drei parallel geschaltete Stromeinstellkanäle (IK), über die der die Prozessgröße repräsentierende Strom auf der Zweidrahtleitung eingestellt wird,
- ein zweifach redundanter Voter (V), der eine Fehlfunktion (Fch) in einem der Messkanäle MK und/oder der Stromeinstellkanäle (IK) erkennt,
- eine zweifach redundante Ausschaltstufe (9), über die ein Messkanal (MK) bzw. ein Stromeinstellkanal (IK) abgeschaltet wird, wenn der Voter (V) in dem Messkanal (MK) oder in dem Stromeinstellkanal (IK) eine Fehlfunktion erkennt.

2. Feldgerät nach Anspruch 1,
wobei jeder Stromeinstellkanal (IK) eine Stromeinstelleinheit (7) und eine Stromregelung (5) aufweist und
wobei die Stromeinstelfeinheit (7) und die Stromregelung (5) parallel geschaltet sind.

3. Feldgerät nach Anspruch 1,
wobei der Voter (V) aus mehreren Komponenten besteht, die zumindest teilweise oder in Gänze zweifach redundant ausgelegt sind.

4. Feldgerät nach Anspruch einem oder mehreren der Ansprüche 1 bis 3,
wobei der Voter (V) ein Mehrheitsvoter ist, der mehrere Voterkanäle (VK) aufweist, wobei in jedem Voterkanal (VK) folgende Komponenten zu finden sind: eine Komparatorstufe (11), über die die von den einzelnen Stromeinstellkanälen (IK) gelieferten Ausgangssignale (Ch1, Ch2, Ch3) miteinander verglichen werden, eine Fehlererkennungsstufe (10), die durch geeignete Verknüpfung der Ausgangssignale (A, B, C, D, E, F) der den Voterkanälen (VK) zugeordneten Komparatorstufen (11) eine in einem Messkanal (MK) oder in einem Stromeinstellkanal (IK) auftretende Fehlfunktion (Fch) erkennt, und eine Ausschaltstufe (9), die den Stromeinstellkanal (IK) ausschaltet, in dem die Fehlererkennungsstufe (10) eine Fehlfunktion detektiert.

5. Feldgerät nach Anspruch 4, wobei jeder Voterkanal (VK) einen Teil der Komparatorstufe (11), einen Teil der Fehlererkennungseinheit (10) und einen Teil der Ausschaltstufe (9) umfasst, und wobei jeder Voterkanal (VK) als integrierter Bestandteil des zugehörigen Messkanals (MK) und des zugehörigen Stromeinstellkanals (IK) ausgestaltet ist.

6. Feldgerät nach einem oder mehreren der vorhergehenden Ansprüche 4 oder 5, wobei die Komparatorstufe (11) für jeden Voterkanal (VK) zwei Komparatormodule (12) aufweist, die die Ausgangssignale (Ch1, Ch2, Ch3) des zugehörigen Stromeinstellkanals (IK) mit den Ausgangssignalen (Ch1, Ch2, Ch3) der verbleibenden Stromeinstellkanäle (IK) vergleicht.

7. Feldgerät nach Anspruch 5,
wobei es sich bei den Fehlererkennungsstufen (10) jeweils um eine Logikstufe handelt, die aus zwei NAND Gattern (15) aufgebaut ist, wobei an den Eingängen des ersten NAND Gatters (15.2) die Ausgangssignale der Komparatoren (12) eines ersten Voterkanals (VK1) anliegen, der einem ausgewählten Messkanal (MK1) zugeordnet ist, und wobei an dem zweiten NAND Gatter (15.1) die zu den Eingängen des ersten NAND Gatters (15.2) redundanten Ausgangssignale der Komparatoren (12) des zweiten Voterkanals (VK2) und des dritten Voterkanals (VK3) anliegen, und wobei die Ausgangssignale des ersten NAND Gatters (15.2) und des zweiten NAND Gatters (15.1) die Steuersignale für die nachgeschaltete Ausschaltstufe (9) bilden.

8. Feldgerät nach einem oder mehreren der Ansprüche 1-7,
wobei jedem Messkanal (MK)/Stromeinstellkanal (IK) eine eigene Spannungsversorgung (U) zugeordnet ist.

9. Feldgerät nach einem oder mehreren der vorhergehenden Ansprüche,
wobei ein Alarmstrommodul (14) vorgesehen ist, das so ausgestaltet ist, dass es einen Fehlerstrom (22mA) setzt, wenn in zumindest zwei Messkanälen (MK) bzw. in zwei Stromeinstellkanälen (IK) gleichzeitig eine Fehlfunktion (Fch) auftritt.

10. Feldgerät nach einem oder mehreren der vorhergehenden Ansprüche,
wobei die Kontroll-/Auswerteeinheit (6) mit Messkanälen (MK)/ Stromeinstellkanälen (IK) die zugehörigen Komponenten des Voters (V) bzw. der Voterkanäle (VK) zumindest teilweise als rekonfigurierbarer Logikbaustein mit mehreren partiell dynamisch rekonfigurierbaren Funktionsmodulen in den Messkanälen (MK) / Stromeinstellkanälen (IK) ausgebildet ist.

11. Feldgerät nach einem oder mehreren der vorhergehenden Ansprüche,
wobei eine Rekonfigurationssteuerung die Funktionsmodule in den Messkanälen (MK) oder den Stromeinstellkanälen (IK) in Abhängigkeit von der jeweils definierten sicherheitskritischen Anwendung so konfiguriert, dass das Feldgerät dem geforderten Sicherheitsstandard genügt.

12. Feldgerät nach einem oder mehreren der vorhergehenden Ansprüche,
wobei der Rekonfigurationssteuerung zumindest ein Mikroprozessor (17) zugeordnet ist, der die Funktionsmodule eines Messkanals (MK) oder eines Stromeinstellkanals (IK), in dem ein Fehler detektiert wird, partiell dynamisch rekonfiguriert.

13. Feldgerät nach einem oder mehreren der vorhergehenden Ansprüche, wobei zumindest einer der Messkanäle (MK) oder Stromeinstellkanäle (IK) analogbasiert in einem FPAA konfiguriert ist.

14. Feldgerät nach einem oder mehreren der vorhergehenden Ansprüche,
wobei die einzelnen Messkanäle (MK) oder Stromeinstellkanäle (IK) so voneinander beabstandet sind, dass eine Temperatur- und/oder eine Spannungsänderung in einem Messkanal (MK) oder Stromeinstellkanal (IK) keinen Einfluss auf einen benachbarten Messkanal (MK) oder Stromeinstellkanal (IK) haben/hat.

15. Feldgerät nach einem oder mehreren der vorhergehenden Ansprüche, insbesondere nach Anspruch 12,
wobei der zumindest eine Mikroprozessor (17) in einem statischen Bereich des Logikbausteins (FPGA) permanent konfiguriert ist.

## Claims

1. Field device for determining or monitoring a process variable in automation technology, wherein the field device meets a security standard which is required in a predefined security-critical application, said field device having a sensor that works according to a defined measuring principle, and a control/evaluation unit (6) which prepares and evaluates the measured data supplied by the sensor along at least three measuring channels (MK) with a redundant and/or dissimilar design, and wherein an analog current interface (8) is provided via which a current that represents the process variable can be adjusted via a two-wire line,
wherein the analog current interface (8) is designed with triple redundancy and wherein the following components are assigned to the analog current interface (8):
- three current adjustment channels (IK) switched in parallel via which the current representing the process variable is adjusted on the two-wire line,
- a voter (V) with double redundancy which detects a malfunction (Fch) in one of the measuring channels (MK) and/or one of the current adjustment channels (IK),
- a switch-off stage (9) with double redundancy via which a measuring channel (MK) and/or a current adjustment channel (IK) is switched off if the voter (V) detects a malfunction in the measuring channel (MK) or in the current adjustment channel (IK).

2. Field device as claimed in Claim 1,
wherein each current adjustment channel (IK) has a current adjustment unit (7) and a current regulation (5) and
wherein the current adjustment unit (7) and the current regulation (5) are switched in parallel.

3. Field device as claimed in Claim 1,
wherein the voter (V) consists of multiple components that have a double redundant design at least partially or entirely.

4. Field device as claimed in one or more of the Claims 1 to 3,
wherein the voter (V) is a majority voter which has multiple voter channels (VK), wherein the following components can be found in each voter channel (VK):
a comparator stage (11) via which the output signals (Ch1, Ch2, Ch3) provided by the individual current adjustment channels (IK) are compared with one another,
an error detection stage (10) which detects a malfunction (Fch) occurring in a measuring channel (MK) or a current adjustment channel (IK) using an appropriate linking of the output signals (A, B, C, D, E, F) of the comparator stages (11) assigned to the voter channels (VK) and
a switch-off stage (9) which switches off the current adjustment channel (IK) in which the error detection stage (10) detects a malfunction.

5. Field device as claimed in Claim 4,
wherein each voter channel (VK) comprises a part of the comparator stage (11), a part of the error detection stage (10) and a part of the switch-off stage (9), and wherein each voter channel (VK) is designed as an integrated part of the corresponding measuring channel (MK) and the corresponding current adjustment channel (IK).

6. Field device as claimed in one or more of the previous Claims 4 or 5,
wherein the comparator stage (11) has two comparator modules (12) for each voter channel (VK), wherein said comparator modules compare the output signals (Ch1, Ch2, Ch3) of the corresponding current adjustment channel (IK) with the output signals (Ch1, Ch2, Ch3) of the remaining current adjustment channels (IK).

7. Field device as claimed in Claim 5,
wherein in each case the error detection stages (10) constitute a logic stage which consists of two NAND gates (15), wherein the output signals of the comparators (12) of a first voter channel (VK1) are applied at the inputs of the first NAND gate (15.2), said first channel being assigned to a selected measuring channel (MK1),
and wherein the output signals of the comparators (12) of the second voter channel (VK2) and the third voter channel (VK3) are applied to the second NAND gate (15.1), said signals being redundant in relation to the inputs of the first NAND gate (15.2), and wherein the output signals of the first NAND gate (15.2) and the second NAND gate (15.1) form the control signals for the downstream switch-off stage (9).

8. Field device as claimed in one or more of the Claims 1 to 7,
wherein each measuring channel (MK) / current adjustment channel (IK) is assigned its own power supply (U).

9. Field device as claimed in one or more of the previous claims,
wherein an alarm current module (14) is provided which is designed in such a way that it sets an alarm current (22 mA) if a malfunction (Fch) occurs simultaneously in at least two measuring channels (MK) or in two current adjustment channels (IK).

10. Field device as claimed in one or more of the previous claims,
wherein the control/evaluation unit (6) is designed with measuring channels (MK) / current adjustment channels (IK), wherein the corresponding components of the voter (V) or voter channels (VK) are at least partially designed as a reconfigurable logic block with several function modules, which can partially be reconfigured in a dynamic manner, in the measuring channels (MK) / current adjustment channels (IK).

11. Field device as claimed in one or more of the previous claims,
wherein a reconfiguration controller configures the function modules in the measuring channels (MK) or the current adjustment channels (IK) depending on the defined security-critical application in such a way that the field device meets the required security standard.

12. Field device as claimed in one or more of the previous claims,
wherein the reconfiguration controller is assigned at least one microprocessor (17) which reconfigures, partially in a dynamic manner, the function modules of a measuring channel (MK) or of a current adjustment channel (IK) in which an error is detected.

13. Field device as claimed in one or more of the previous claims,
wherein at least one of the measuring channels (MK) or current adjustment channels (IK) is configured in an FPAA on an analog basis.

14. Field device as claimed in one or more of the previous claims,
wherein the individual measuring channels (MK) or current adjustment channels (IK) are spaced at a distance from one another in such a way that a change in the temperature and/or voltage in a measuring channel (MK) or a current adjustment channel (IK) do/does not have any effect on a neighboring measuring channel (MK) or current adjustment channel (IK).

15. Field device as claimed in one or more of the previous claims, particularly Claim 12,
wherein the at least one microprocessor (17) is permanently configured in a static area of the logic block (FPGA).

## Revendications

1. Appareil de terrain destiné à la détermination ou la surveillance d'une grandeur de process dans la technique d'automatisation, l'appareil de terrain répondant à une norme de sécurité exigée par une utilisation prédéfinie, critique en terme de sécurité, lequel appareil de terrain comprend un capteur, qui fonctionne d'après un principe de mesure défini, ainsi qu'une unité de contrôle / d'exploitation (6), qui traite et exploite les données de mesure fournies par le capteur le long d'au moins trois voies de mesure (MK) conçues de manière redondante et/ou diversitaire, et une interface de courant analogique (8) étant prévue, par l'intermédiaire de laquelle un courant représentant la grandeur de process est réglable via une ligne bifilaire,
l'interface de courant analogique (8) étant conçue à triple redondance et les composants suivants étant attribués à l'interface de courant analogique (8) :
- trois voies de réglage de courant (IK) couplées en parallèle, par l'intermédiaire desquelles le courant représentant la grandeur de process est réglé via la ligne bifilaire,
- un dispositif de décision (V) à double redondance, qui détecte un dysfonctionnement (Fch) dans l'une des voies de mesure (MK) et/ou dans l'une des voies de réglage de courant (IK),
- un étage de coupure (9) à double redondance, par l'intermédiaire duquel une voie de mesure (MK) ou une voie de réglage de courant (IK) est coupée lorsque le dispositif de décision (V) détecte un dysfonctionnement dans la voie de mesure (MK) ou dans la voie de réglage de courant (IK).

2. Appareil de terrain selon la revendication 1,
pour lequel chacune des voies de réglage de courant (IK) comporte une unité de réglage de courant (7) et une régulation de courant (5) et
l'unité de réglage de courant (7) et la régulation de courant (5) sont couplés en parallèle.

3. Appareil de terrain selon la revendication 1,
pour lequel le dispositif de décision (V) est constitué de plusieurs composants, qui sont conçus au moins partiellement ou en totalité avec une double redondance.

4. Appareil de terrain selon l'une ou plusieurs revendications 1 à 3,
pour lequel le dispositif de décision (V) est un dispositif de décision majoritaire, qui présente plusieurs voies de dispositif de décision (VK), chacune des voies de dispositif de décision (VK) comportant les composants suivants :
un étage de comparateur (11), par l'intermédiaire duquel les signaux de sortie (Ch1, Ch2, Ch3), fournis par les différentes voies de réglage de courant (IK), sont comparés entre eux,
un étage de détection d'erreur (10), qui détecte - grâce à une combinaison appropriée des signaux de sortie (A, B, C, D, E, F) des étages de comparateur (11) attribués aux voies de dispositif de décision (VK) - un dysfonctionnement (Fch) apparaissant dans une voie de mesure (MK) ou dans une voie de réglage de courant (IK) et
un étage de coupure (9), qui coupe la voie de réglage de courant (IK), dans laquelle l'étage de détection d'erreur (10) détecte un dysfonctionnement.

5. Appareil de terrain selon la revendication 4,
pour lequel chaque voie de dispositif de décision (VK) comprend une partie de l'étage de comparateur (11), une partie de l'unité de détection d'erreur (10) et une partie de l'étage de coupure (9), et pour lequel chaque voie de dispositif de décision (VK) est conçue comme partie intégrante de la voie de mesure (MK) correspondante et de la voie de réglage de courant (IK) correspondante.

6. Appareil de terrain selon l'une ou plusieurs revendications 4 ou 5,
pour lequel l'étage de comparateur (11) présente pour chaque voie de dispositif de décision (VK) deux modules comparateurs (12), qui comparent les signaux de sortie (Ch1, Ch2, Ch3) de la voie de réglage de courant (IK) correspondante avec les signaux de sortie (Ch1, Ch2, Ch3) des voies de réglage de courant (IK) restantes.

7. Appareil de terrain selon la revendication 5,
pour lequel il s'agit, concernant les étages de détection d'erreur (10), respectivement d'un étage logique constitué de deux portes NON ET (15), les signaux de sortie des comparateurs (12) d'une première voie de dispositif de décision (VK1) étant appliqués aux entrées de la première porte NON ET (15.2), laquelle première voie est attribuée à une voie de mesure (MK1) sélectionnée, et les signaux de sortie des comparateurs (12) de la deuxième voie de dispositif (VK2) et de la troisième voie de dispositif de décision (VK3), lesquels signaux sont redondants par rapport aux entrées de la première porte NON ET (15.2), étant appliqués à la deuxième porte NON ET (15.1), et les signaux de sortie de la première porte NON ET (15.2) et de la deuxième porte NON ET (15.1) formant les signaux de commande pour l'étage de coupure (9) aval.

8. Appareil de terrain selon l'une ou plusieurs revendications 1 à 7,
pour lequel chaque voie de mesure (MK) / voie de réglage de courant (IK) se voit attribuer une propre alimentation de tension (U).

9. Appareil de terrain selon l'une ou plusieurs des revendications précédentes, pour lequel est prévu un module de courant d'alarme (14), lequel est conçu de telle sorte à délivrer un courant de défaut (22 mA) en cas d'apparition d'un dysfonctionnement (Fch) simultanément dans au moins deux voies de mesure (MK) ou dans au moins deux voies de réglage de courant (IK).

10. Appareil de terrain selon l'une ou plusieurs des revendications précédentes,
pour lequel l'unité de contrôle / d'exploitation (6) est conçue, avec les voies de mesure (MK) / voies de réglage de courant (IK), les composants correspondants du dispositif de décision (V) ou les voies de dispositif de décision (VK), au moins partiellement en tant que composant logique reconfigurable avec plusieurs modules de fonction reconfigurables, partiellement de façon dynamique, dans les voies de mesure (MK) / voies de réglage de courant (IK).

11. Appareil de terrain selon l'une ou plusieurs des revendications précédentes,
pour lequel une commande de reconfiguration configure les modules de fonction dans les voies de mesure (MK) ou les voies de réglage de courant (IK) en fonction de l'utilisation définie, critique en terme de sécurité, de telle sorte que l'appareil de terrain réponde soit conforme au standard de sécurité exigé.

12. Appareil de terrain selon l'une ou plusieurs des revendications précédentes,
pour lequel la commande de reconfiguration se voit attribuer au moins un microprocesseur (17), qui reconfigure, en partie de façon dynamique, les modules de fonction d'une voie de mesure (MK) ou une voie de réglage de courant (IK), dans laquelle une erreur est détectée.

13. Appareil de terrain selon l'une ou plusieurs des revendications précédentes, pour lequel l'une des voies de mesure (MK) ou voies de réglage de courant (IK) est configurée sur une base analogique dans un composant FPAA.

14. Appareil de terrain selon l'une ou plusieurs des revendications précédentes, pour lequel les différentes voies de mesure (MK) ou voies de réglage de courant (IK) sont espacées les unes par rapport aux autres de telle sorte qu'un changement de température et/ou de tension dans une voie de mesure (MK) ou une voie de réglage de courant (IK) n'a/n'ont aucune influence sur une voie de mesure (MK) ou voie de réglage de courant (IK) voisine.

15. Appareil de terrain selon l'une ou plusieurs des revendications précédentes, notamment selon la revendication 12,
pour lequel l'au moins un microprocesseur (17) est configuré de façon permanente dans une zone statique du composant logique (FPGA).
